(19) Europäisches Patentamt / European Patent Office / Office européen des brevets

(11) **EP 4 353 004 B1**

(12) **EUROPEAN PATENT SPECIFICATION**

(45) Date of publication and mention
of the grant of the patent:
**27.05.2026 Bulletin 2026/22**

(21) Application number: **22706750.1**

(22) Date of filing: **02.02.2022**

(51) International Patent Classification (IPC):
*G06N 20/00* (2019.01)    *H04W 24/02* (2009.01)
*H04W 28/16* (2009.01)

(52) Cooperative Patent Classification (CPC):
**G06N 20/00; H04W 24/02;** H04W 28/16

(86) International application number:
**PCT/EP2022/052482**

(87) International publication number:
**WO 2023/030694 (09.03.2023 Gazette 2023/10)**

(54) **AI-DRIVEN INTELLIGENT RADIO CONTROLLER**

KI-GESTEUERTE INTELLIGENTE FUNKSTEUERUNG

CONTRÔLEUR RADIO INTELLIGENT PILOTÉ PAR INTELLIGENCE ARTIFICIELLE (AI)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.09.2021 EP 21194808
12.11.2021 EP 21208057**

(43) Date of publication of application:
**17.04.2024 Bulletin 2024/16**

(73) Proprietor: NEC Corporation
Minato-ku
**Tokyo 108-8001 (JP)**

(72) Inventors:
• **SALVAT LOZANO, Josep Xavier**
**69115 Heidelberg (DE)**
• **GARCIA-SAAVEDRA, Andres**
**69115 Heidelberg (DE)**
• **LI, Xi**
**69115 Heidelberg (DE)**
• **COSTA-PÉREZ, Xavier**
**69115 Heidelberg (DE)**

(74) Representative: **Ullrich & Naumann PartG mbB
Schneidmühlstrasse 21
69115 Heidelberg (DE)**

(56) References cited:
**US-A1- 2018 285 166    US-A1- 2021 263 779**

• **MOZO ALBERTO ET AL: "Scalable Prediction of
Service-Level Events in Datacenter
Infrastructure Using Deep Neural Networks",
IEEE ACCESS, vol. 7, 27 November 2019
(2019-11-27), pages 179779 - 179798,
XP011761525, DOI: 10.1109/
ACCESS.2019.2956182**

## Description

The project leading to this application has received funding from the European Union's Horizon 2020 research and innovation programme under grant agreement No 856709.

The present invention relates to a computer-implemented method of resource allocation for multiple virtual distributed units, vDUs, deployed in a shared radio computing platform, wherein the vDUs share the same Radio Unit, RU, having a fixed number of Physical Resource Blocks, PRBs.

Furthermore, the present invention relates to a radio controller for resource allocation for multiple vDUs deployed in a shared radio computing platform, wherein the vDUs share the same RU having a fixed number of PRBs.

The fifth-generation (5G) of wireless networks promises to bring to the table new advances such as a huge increase in mobile data rates, a plunge in communications latency, and an increase in the quality of experience perceived by users that can cope with the ever-increasing demand in Internet traffic. To fulfill its promises, several key innovations will be part of the new 5G network. Like previous wireless network generations, 5G will use higher frequency bands (e.g., sub 6 GHz Band and 24 GHz band) and reduce the cell size, increasing the number of cells deployed to increase the user's capacity. Thus, the future 5G mobile network will be an ultra-dense mesh that will provide seamless coverage, higher user data rates, and low latency communications.

However, such a dense network comes at a high cost on capital and operational expenditure (CAPEX/OPEX). First, as cells provide coverage to smaller regions, operators must deploy more radio equipment to cover the same area. Furthermore, as cells are smaller, user mobility changes between them can occur more often, leading to challenging mobility management. Also, upgrading the equipment and detecting failures becomes more complex as the network sits on top of more individual pieces. To cope with all the aforementioned challenges, mobile network operators (MNOs) are heavily pushing to completely virtualize the mobile network's different components to bend network management and control.

Virtualization softwarized Network Functions (NFs), e.g., firewalls, load-balancers, IDSs, so that they are taken out of proprietary hardware and run in commercial off-the-shelf (COTS) equipment. In detail, a virtualized NF runs on a virtual environment isolated from other host processes. This has numerous advantages. First, it sets operators free from choosing a specific vendor for their NFs as now they can run as software. This also allows for easy upgrading of NFs, replacement, and deployment, i.e., virtualization enables orchestrating the different virtual network components. In fact, many of the main components of a mobile network are already virtual. For example, the core network with the components of the Evolved Packet Core (e.g., Mobility Management Entity (MME), Serving Gateway (SGW), etc.) are already virtualized in most of the mobile networks. Second, virtual environments can be tailored-made to each NF. For example, a NF might need to run in a different OS than the host or might require some specific libraries. In fact, as it is possible to create multiple different virtualized environments in one host, multiple NF instances can run on the same hosts, thereby increasing the total resource utilization.

The development of virtualized Radio Access Networks (vRANs) stands out as the next generation towards a fully virtualized mobile network. vRAN virtualizes the RAN functionalities into a centralized location results in reduced costs, since RANs will run on generic hardware, achieving better resource utilization, and moreover multiple RANs sharing the same host leads to increased flexibility as it will be simpler to roll out updates and perform control and management operations.

US2018/285166 describes a method by multiple virtual machines executing on a server with a noisy neighbor problem. The system gathers usage and performance metrics such as CPU utilization and CPU load to optimize the sharing of resources in the server.

It is an object of the present invention to improve and further develop a method of resource allocation for multiple vDUs and a radio controller of the initially described type in such a way that radio resources and available CPU resources are utilized in an optimized way in terms of efficiency.

In accordance with the invention, the aforementioned object is accomplished by a computer-implemented method of resource allocation for multiple virtual distributed units, vDUs, deployed in a shared radio computing platform, wherein the vDUs share the same Radio Unit, RU, having a fixed number of Physical Resource Blocks, PRBs, the method comprising obtaining, by a radio controller, at set of metrics from the radio computing platform for each of the vDUs deployed; learning, by a learning agent of the radio controller based on the obtained set of metrics, the traffic patterns and the CPU consumption of the vDUs deployed; and computing jointly, by the radio controller based on the learned traffic patterns and the CPU consumption of the vDUs, a PRB assignment and CPU set configuration for each vDU.

Furthermore, the aforementioned object is accomplished by a radio controller and by a tangible, non-transitory computer-readable medium according to the independent claims. The invention is set out in the appended claims. In the following, parts of the description and drawings referring to embodiments which are not covered by the claims are not presented as embodiments of the invention, but as examples useful for understanding the invention.

Embodiments of the present invention provide a controller that mitigates the computing overhead caused by noisy neighbors when running multiple vDUs in a shared computing platform. According to embodiments, the proposed controller leverages machine learning techniques to optimize the joint allocation of radio and computing resources for each vDU instance reducing the computing overhead.

According to embodiments, the present invention relates to an AI driven intelligent radio controller that controls the resource allocation of multiple virtual base stations in a shared computing platform. According to embodiments, the allocation of virtual base stations depends on some parameters, which can be CPU set, CPU allocation, uplink traffic, downlink traffic, etc. The radio controller may be configured to measure these parameters in real-time and to adjust the allocation for better optimization. The radio controller may be trained by a machine learning algorithm which helps in constant learning and allocation of resources to virtual base stations. The radio controller may also help in mitigating the common problem of CPU overhead and "noisy neighbor", wherein multiple virtual base stations are allocated in a single location (host) and wherein, as a result, the CPU of the host is overloaded and does not operate efficiently.

According to embodiments of the invention, the computing of the PRB assignment and CPU set configuration for each vDU may be performed by minimizing the overall computing overhead generated by noisy neighbors. This problem describes the effect that CPU usage does not scale linearly with the number of vDU instances deployed, which is due to additional computing overhead caused by the system when all vDU instances share the same physical CPU resources. In other words, in the context of the present disclosure, the noisy neighbor problem describes an increased resource consumption due to the resources contentions between different vDUs deployed in the same infrastructure. Current state-of-the-art techniques do not take it into account the noisy neighbor's problem. Minimizing the overall CPU overhead is key so that more vDUs can be deployed into the system and boost revenue. Generally, it can be noted that by taking into account the noisy neighbor problem, efficiency can be increased when doing resource allocation.

According to embodiments of the invention, the radio computing platform may include some monitoring capabilities. In particular, it may be provided that the radio computing platform includes an agent that is configured to obtain the set of metrics by performing respective measurements and to store the measurement results for the set of metrics in a metrics database. In an embodiment, the set of performance metrics of each of the vDUs includes at least one of CPU usage, uplink and downlink bitrate (in Mbits/sec), buffer status report on uplink and downlink (in bits), uplink and downlink index Modulation Coding Scheme (MCS), uplink Signal-to-Noise Ratio (SNR, in dB), and downlink Channel Quality Indicator, CQI.

According to embodiments of the invention, it may be provided that the maximum CPU usage and overhead of the vDUs deployed is limited by setting a predefined or configurable threshold to the maximum number of PRBs that can be allocated to individual ones of the vDUs. In this way, it can be ensured that there is enough CPU capacity in the radio computing platform to deploy other vDUs.

According to embodiments of the invention, learning the traffic patterns and the CPU consumption of the vDUs deployed is performed by the learning agent based on reinforcement learning techniques. The learning agent may be configured to fetch the set of metrics from the metrics database. Based thereupon, the learning agent may be configured to use a learning algorithm that operates on an input context vector including, per deployed vDU, a predicted SNR value, a predicated traffic in downlink value and a predicted traffic in uplink value.

According to embodiments of the invention, the learning agent may be configured to use a learning algorithm that produces an output action vector including, per deployed vDU, a PRBs weight (indicating how much PRBs should be allocated to a vDU compared to the other vDU), a number of CPUs and a CPU set isolation level. The latter action controls how much isolated a particular CPU configuration shall be with respect to CPU set configurations of other vDUs.

According to embodiments of the invention, the learning agent may be configured to compute a loss value for each pair of input context and output actions, the loss value indicating how good a particular action was that the learning agent took for a particular context. The loss value may be calculated by computing uplink and downlink packet losses using bitrate measurement, buffer status reports, and the running MCS.

According to embodiments of the invention, the learning agent may be configured to communicate the computed PRB assignment and CPU set configuration for each vDU via the radio computing platform's interfaces. More specifically, it may be provided that the radio controller (and thus the learning agent) has access to the radio and computing control APIs of the radio computing platform (e.g. an edge host of a mobile network) where the different vDUs will be deployed. In particular, the radio controller may have access to the following control operations: i) updating the computing configuration of a vDU (CPU sets), and ii) updating the maximum amount of PRBs allowed to a vDU.

According to embodiments of the invention, the learning agent may be configured to run in discrete time intervals. This time intervals can be regarded as decision intervals in the sense that, at the beginning of each interval, the learning agent changes the configuration of vDUs to minimize the overall computing overhead.

According to embodiments of the invention, the learning agent may be configured to run in a different location than the radio computing platform in a controlled environment. This has the advantage that the learning agent execution does not interfere with the execution of the vDUs, which may matter in view of the fact that the computing resources at the edge are limited (and should therefore be used by the necessary processes only, i.e. the deployed vDUs).

According to embodiments of the invention, the vDUs may be deployed in the radio computing platform by using hypervisors, which would be easy to implement as hypervisors are currently the most common virtualization technique to spawn multiple virtual machines. Alternatively, the vDUs may be deployed in the radio computing platform in containers, which would constitute a more lightweight virtualization.

There are several ways how to design and further develop the teaching of the present invention in an advantageous way. To this end, it is to be referred to the dependent claims on the one hand and to the following explanation of preferred embodiments of the invention by way of example, illustrated by the figure on the other hand. In connection with the explanation of the preferred embodiments of the invention by the aid of the figure, generally preferred embodiments and further developments of the teaching will be explained. In the drawing

Fig. 1    is a schematic view illustrating a 5G vRAN architecture according to prior art,

Fig. 2    is a diagram illustrating CPU consumption depending on the number of deployed vDU instances running at maximum traffic,

Fig. 3    is a schematic view illustrating the CPU topology of an intel i7 processor according to prior art,

Fig. 4    is a diagram illustrating the CPU overhead when using different CPU sets,

Fig. 5    is a diagram illustrating the CPU consumption with different MCSs in the downlink,

Fig. 6    is a diagram illustrating the CPU consumption with different MCSs in the uplink,

Fig. 7    is a schematic view illustrating a system architecture of an AI-driven intelligent radio controller according to an embodiment of the present invention, and

Fig. 8    is a schematic view illustrating a CPU topology for the i7 processor of Fig. 3 created according to embodiments of the present invention.

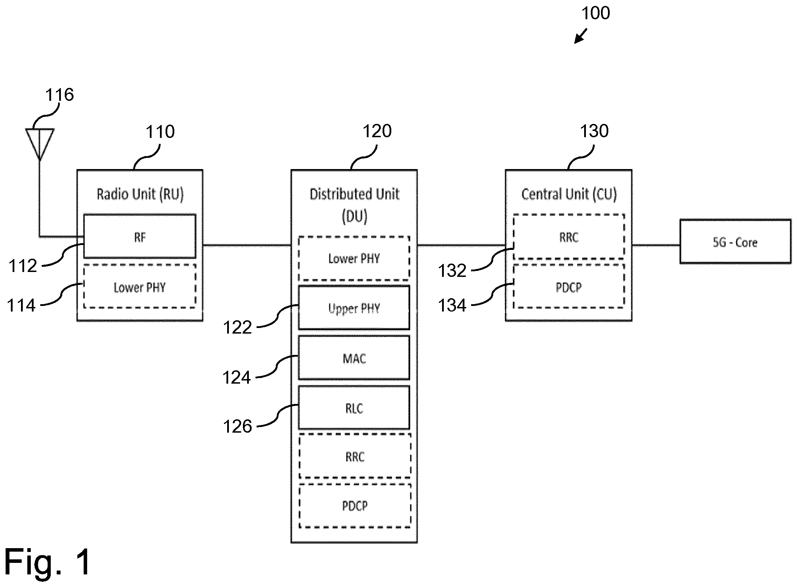

Fig. 1 schematically illustrates a typical 5G vRAN architecture 100 according to prior art. As shown in Fig. 1, the 5G vRAN 100 is composed of three main building blocks: (i) the Radio Unit (RU) 110, (ii) the Distributed Unit (DU) 120 and the (iii) Central Unit (CU). The RU 110 contains the radio hardware 112 and handles the lower PHY layer functionalities 114, which converts radio signals received from the antenna 116 into digital radio samples and then sends them to the DU 120 (or, the other way round, converts digital radio samples received from the DU 120 into radio signals and sends them to the antenna 116). The DU 120 processes the digital radio samples coming from the RU 110 executing part of the RAN functions such as the upper PHY layer 122, the MAC layer 124 and RLC layer 126. Finally, the CU 130 handles the highest layer functionalities such as the RRC layer 132 and the PDCP layer 134. However, depending on the selected RAN functional splits, the DU 120 can process the upper layer functions from the CU 130 or the lower layer functions of the RU 110, as indicated by the dotted line boxes.

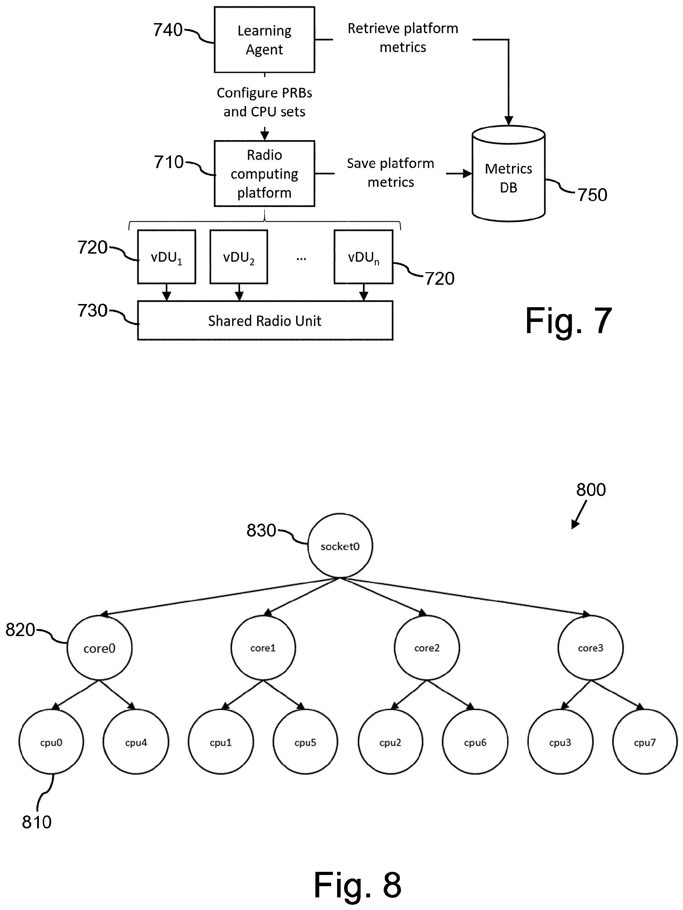

In deployment scenarios addressed by embodiments of the present invention, multiple virtualized DUs (vDUs) are installed in a single host platform, each deployed in a container, and the CU is running in another host, as schematically shown in Fig. 7. Despite the gains that vRAN promises when running multiple virtualized DUs (vDUs), given maximum traffic in both uplink and downlink, the CPU usage results are surprisingly high.

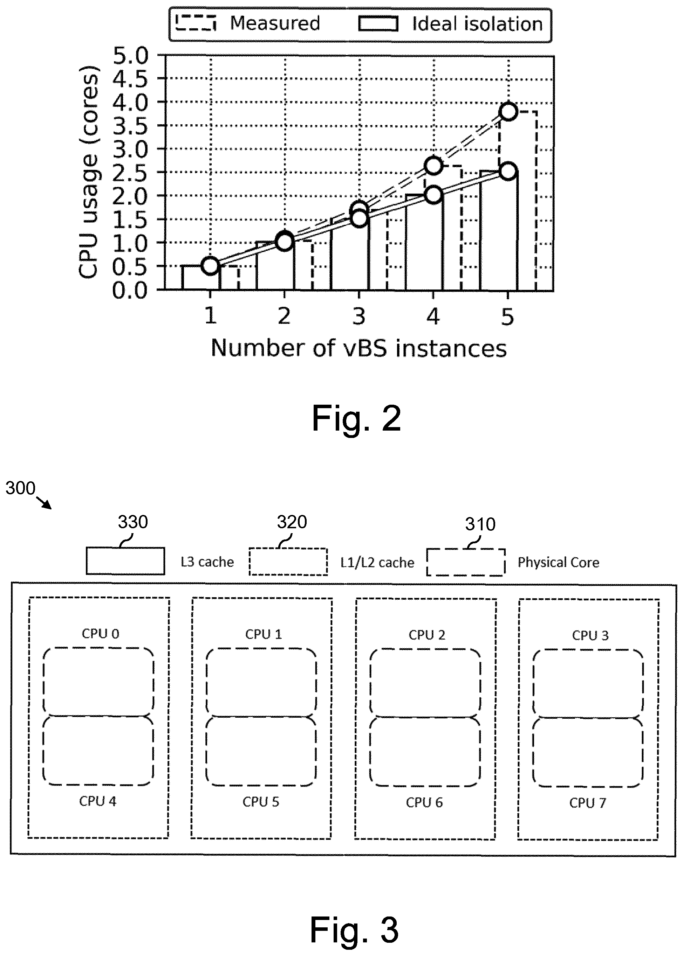

As indicated in Fig. 2 the measured CPU usage does not scale linearly with the number of vDU instances deployed in the system, comparing to the case of "ideal isolation". This is counterintuitive as one would expect a linear increase as each vDU runs in a virtual '*isolated*' environment from other host processes. However, this is due to additional computing overhead caused by the system when all vDU instances share the same physical CPU resources. This is what is called the 'noisy neighbors problem' in the context of the present disclosure.

Embodiments of the present invention present a novel approach to decide the CPU set configuration and PRB (Physical Resource Blocks) resources to different vDUs with the aim to minimize the overall computing overhead generated by this noisy neighbors problem. The approach according to an embodiment of the invention learns the traffic patterns and the CPU consumption of the vDUs deployed in the system and based on that selects the most appropriate configuration. Related works include vrAIn (for reference, see Ayala-Romero, Jose A., et al. "vrAIn: A deep learning approach tailoring computing and radio resources in virtualized RANs." The 25th Annual International Conference on Mobile Computing and Networking. 2019*),* which allocates computing capacity to different vDU using a deep reinforcement learning approach, however without taking into account the caused computing overhead due to the sharing. The approach according to the present invention is different from vrAIn, as it addresses the noisy neighbor problem when allocating different resources to the vDUs.

The main cause of the computing overhead has its roots in the process dynamics of the vDUs combined with the process scheduling. The vDU execution process always follows the same pattern: (1) it wakes up when it receives new radio samples from the RF hardware; (2) it processes the radio samples; (3) it generates new radio samples and sends them back to the RF hardware; and (4) it snoozes while waiting for more radio samples. The fact is, a vDU process is constantly waking up and blocking itself. The vDU logic must run extremely fast as each process has tight time constraints in the order of few milliseconds. The vDU threads (at least the threads dealing with the PHY and MAC layer) usually run with real-time priority as the CPU scheduler will always prefer to run a real-time priority thread unless it blocks itself voluntarily. The real-time priority threads are usually an excellent choice to minimize latency to avoid scheduler thread queues.

However, the tight time constraint in combination with the wake-up-execute-snooze vDU flow pose additional work to the CPU scheduler of the system that hosts the vDUs. On the one hand, cache memory, which can be 10 to 100 times faster than main memory, is heavily used in modern processors. Accesses that occur in cache are not only much faster, but they also consume no memory bus bandwidth. Caches are quick, but they are limited. When a processor's cache is full, it must evict data from the cache to make room for new data. Typically, the least recently used data is chosen for eviction. As a result, many concurrent threads tend to evict each other's data, and too many threads fighting for cache space can degrade performance. On the other hand, whenever a vDU process blocks waiting for more radio samples, either the CPU scheduler switches the process that runs in the CPU or releases the CPU if no other process needs to run. The switching operation comes at a cost, as the process' state must be saved if the process did not finish the execution. The scheduler has to save its registers and cache state so that the CPU scheduler can restore them later when the execution resumes. Usually, the overhead caused by saving the registers is insignificant but saving the cache state can be much heavier as the size of the data that must be saved and restored is more significant (approx. megabytes size). Thus, the high-speed switching of vDU threads pose additional work to the CPU scheduler as they constantly wake up and block in few milliseconds.

Although thread switching is the most relevant source of overhead and the main focus of the present invention, it is not the only one. Containers use a security option called a secure computing filter, also known as *seccomp*. The seccomp filters which system calls (aka syscalls) a container can execute. It contains a set of rules on which syscalls are not allowed to run inside a container. This is of paramount importance in multi-tenant environments where different untrusted parties share a host where they deploy their services. It is desirable to avoid that containers from any party could retrieve confidential information or attack the system using certain syscalls. For example, a container should not have access to the shutdown syscall, as running it would hurt parties with active containers. The seccomp filter is applied every time a container wants to run a syscall and might impact the CPU if a thread heavily uses certain syscalls. In vDUs, receiving and sending samples to the RF hardware uses several syscalls, which, combined with the fast execution constraint, increases the CPU usage.

On the other hand, container networking might also increase CPU usage. Networking is usually implemented using virtual networks that might require different network virtualization technologies under the hood. In the case of containers, it is mainly a combination of network namespaces with virtual Ethernet pairs. With high data rates and small packet sizes, the number of operations that the host and container must do to send and receive packets increases the overall CPU usage. However, the networking overhead is well-known, and there are already many solutions to mitigate it. For example, DPDK or FDio move in that direction. In the case of vDUs, the traffic they receive is not as high to consider the increased CPU usage due to the network virtualization as relevant.

Although the problem presented above is unavoidable, several strategies can be used to help to reduce the CPU overhead. Firstly, the choice of the right CPU set per vDUs is essential to reduce this overhead. Containers allow specifying the CPU set, and a right configuration is key to reduce cache contention. For example, Fig. 3 show the CPU topology of an intel i7 processor 300. Inside the processor 300, different CPU cores 310 share specific cache levels.

Cache memory is the fastest but smallest memory in a computer. It is divided into three levels. Level 1 (L1) cache is the fastest memory of a computer, but its size is minimal (~ 64KB). Level 2 (L2) cache is the second fastest, and its size is a bit bigger than L1 (~256KB). Both L1 and L2 are dedicated per pair of CPU cores 310. That is, each pair of CPU cores 310 has its L1 and L2 cache memory 320. For instance, as shown in Fig. 3, L1 and L2 caches 320 are shared in pairs of CPUs {0,4},{1,5},{2,6},{3,7}.

On the other hand, Level 3 (L3, also known as Las Level Cache (LLC)) cache 330 is the slowest cache memory, but its size is bigger (~16MB). In contrast with L1 and L2 cache 320, it is shared across all the CPUs 310. Server processors usually have multiple cores (called NUMA cores), which separate the L3 cache 330. Thus, placing the different vDUs in CPU sets that share as few caches as possible directly impacts the overall CPU overhead of the system as threads will content less for the CPU caches.

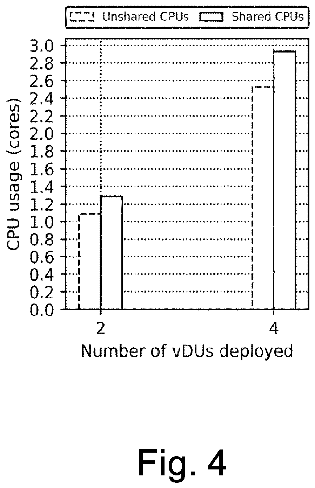

Fig. 4 is a diagram showing the measured CPU overhead when using a processor with the same architecture as shown in Fig. 3. In the case of two vDUs deployed, they were placed in CPUs 1 and 2 (Unshared CPUs case) and in CPUs 1 and 5 (Shared CPUs case). In the case of four vDUs, they were placed in CPUs 0, 1, 2, and 3 (Unshared CPUs case) and in CPUs 1, 5, 2, and 6 (Shared CPUs case). As shown, the placement of vDUs in cores that share fewer cache levels can reduce the system's overall CPU usage by a significant percentage.

However, a complete unshared placement would reduce the amount of vDUs that can be allocated in the system. For instance, with the CPU topology shown in Fig. 3, it would only be possible to allocate 4 vDUs for 8 CPUs. It would be desirable to find an optimum trade-off configuration where the vDUs deployed in a system share a certain amount of CPUs with less overall CPU overhead but at the same time allow maximum deployment of vDUs.

Moreover, the CPU consumption also depends on the amount of traffic vDUs are currently processing. Therefore, the CPU consumption of a vDU is linked to the Modulation Coding Scheme (MCS) and the number of Physical Resource Blocks (PRBs) a vDU is currently using. Both options set the transport block size, which in turn sets the number of bytes that can be sent or received. On the one hand, it is always desirable to use the maximum MCS as possible, as with a higher MCS fewer transport blocks have to be sent as the number of bytes per transport block is higher.

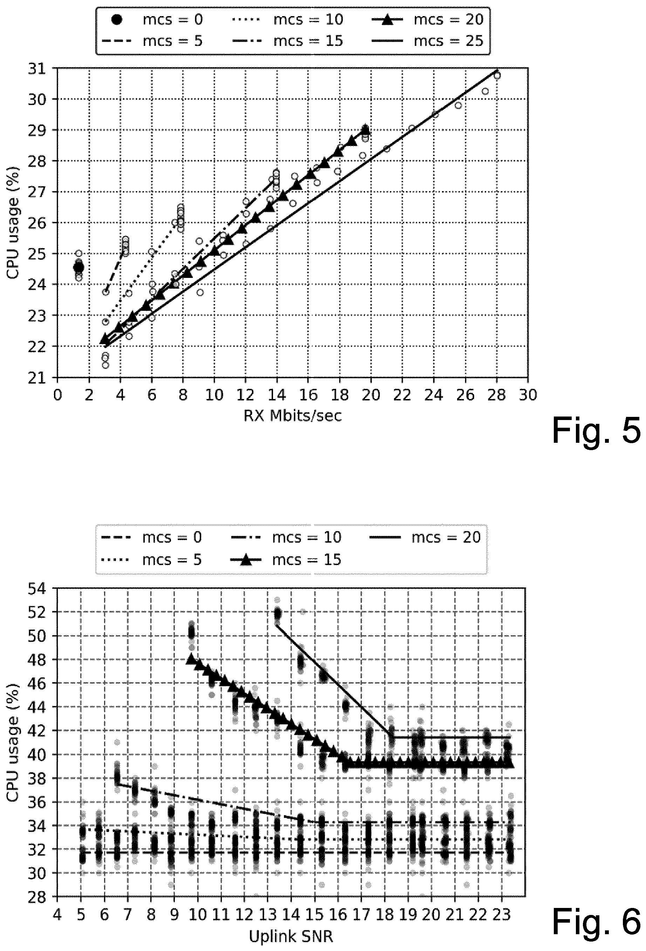

Fig. 5 shows this behavior for downlink traffic. As can be seen, for the same amount of traffic, a lower MCS will require more CPU usage. However, if vRANs use a high MCS even in the case of a relatively low SNR (Signal-to-Noise Ratio), the radio decoder will have to do more iterations to fully decode the data increasing the CPU consumption. Fig. 6 shows this behavior. On the other hand, limiting the number of PRBs available limits the number of bytes that a vDUs can send. Thus setting a limit on the PRBs sets a bound on the CPU usage of a vDU as well as a bound on the number of bytes that can be sent and received.

More specifically, Fig. 6 shows the CPU consumption in the uplink with different MCSs. In summary, the deployment of multiple vDUs in the same location results in an increased CPU usage. This problem is unavoidable as the logic of a vDU cannot be changed. This, in turn, it makes the system less efficient and poses a challenge in multi-tenant scenarios where one would like to deploy as many vDUs as possible. As already mentioned before, in the present disclosure this problem is referred to as the noisy neighbor's problem.

Fig. 7 schematically illustrates, in accordance with an embodiment of the present invention, an AI-driven intelligent radio controller that, through different policies and actions, mitigates the overall CPU overhead in multi-tenant vRAN deployments. The possible implementation shown in Fig. 7 considers a scenario where a radio computing platform 710 has multiple vDUs 720 sharing the same Radio Unit (RU) 730 (i.e., sharing the same radio resources), which has a fixed number of PRBs. Depending on the current traffic patterns and configuration of the vDUs 720 deployed in the radio computing platform 710 (herein sometimes briefly referred to as the edge host or simply host), the radio controller 700 will decide the PRB assignment and CPU set configuration for each vDU 720.

According to embodiments of the invention, the underlying scenario may include (i) the host 710 located at the edge of a mobile network where vDUs 720 run, and (ii) a learning agent 740 that may run in a different location than the edge host, i.e. the radio computing platform 710, but can reach the radio computing platform's 710 APIs (Application Programming Interfaces).

In an embodiment, the host 710 may include or may be configured to communicate with a metric agent (not explicitly shown in Fig. 7), which takes different metrics from the host 710 and the vDUs 720 currently deployed. These metrics may be saved into a metrics database 750, which may be deployed in a different location. In detail, according to embodiments of the invention, the following metrics may be provided per vDU 720:

- CPU usage of each vDU 720 deployed (in %);
- Uplink and downlink bitrate (in Mbits/sec);
- Buffer status report on uplink and downlink (in bits);
- Uplink and downlink index MCS (Modulation Coding Scheme);
- Uplink SNR (in dB); and/or
- Downlink CQI (Channel Quality Indicator).

According to embodiments of the invention, the learning agent 740 may fetch the metrics from the metrics database 750, which has all the measurements the radio computing platform's 710 metrics agent has made. Furthermore, the learning agent 140 may be a configured to decide, based on one or more of the above mentioned metrics, the current PRBs and CPU set configuration of each deployed vDU 720.

According to embodiments of the invention, the learning agent 740 may run in discrete time intervals (that can be regarded as decision intervals) of predefined or configurable length. At the beginning of each interval, the learning agent 740 may change the configuration of vDUs 720 to minimize the overall computing overhead.

As explained before, the CPU overhead is unavoidable as a vDU 720 cannot change its logic, but minimizing the total CPU consumption on the edge host 710 is key to deploy as much as vDUs 720 as possible. According to embodiments of the invention, the radio controller will make two critical choices for configuring each vDU 720:

First, it will learn the traffic patterns of the vDUs 720 deployed in the host 710 and configure its PRBs and CPU to reduce the CPU usage, increasing the overall system efficiency. As described above, the traffic that a vDU 720 is processing relates to the CPU usage and the CPU overhead which the host 710 experiences. As it is unlikely that a vDU 720 runs at the maximum requested capacity all the time, it is possible to reduce the number of PRBs allocated to a vDU 720 to limit the maximum CPU usage and overhead. Therefore, according to an embodiment of the invention, the first choice to be made by the radio controller will be setting a limit to the number of PRBs per vDU 720 to limit the CPU usage while reducing the potential CPU overhead due to noisy neighbors. This will ensure that there is enough CPU capacity in the host 710 to deploy other vDUs 720.

Second, the radio controller may be configured to choose a CPU set for each vDU 720 that minimizes the CPU overhead the host 710 might experience, as CPU sets that share fewer cache levels contribute less to the CPU overhead.

In an embodiment, the radio controller algorithm may be based on reinforcement learning techniques. In this regard, it may be provided that, at the beginning of each decision interval, the learning agent 740 computes a new configuration for the different vDUs 720 deployed in the computing platform 710.

According to embodiments of the invention, the input of the radio controller algorithm may be a context vector with at least some of the following values per vDU 720:

- Predicted SNR value: The uplink SNR and downlink CQI may be mapped to an SNR value between 0 and 1. According to an embodiment of the invention, past data from a vDU 720 can be used to create a mapping using machine learning or calibrate one vDU 720 to map them between 0 and 1. 0 means a low SNR context, and 1 mean a very high SNR context;
- Predicted traffic in downlink: The downlink traffic may be predicted as a percentage of the maximum traffic that can be achieved with the predicted SNR. As SNR sets the maximum MCS that a vDU 720 can use, it is advantageous to predict the maximum downlink traffic as a percentage of the maximum bitrate achievable with the maximum MCS that can be used. The traffic may be predicted using the data of previous intervals;
- Predicted traffic in uplink: The uplink traffic may be predicted analogously as the prediction of the downlink traffic.

According to embodiments of the invention, the output of the radio controller algorithm may be a vector of action per vDU 720 with at least some of the following values:

- PRBs weight: The weight is a number between 0.0 and 1.0 that indicates how much PRBs should be allocated to a vDU 720 compared to the other vDUs 720;
- Number of CPUs: The number of CPUs that are going to be allocated to each vDU 720;
- CPU set isolation level: This action controls a degree of isolation the CPU configuration to be implemented shall have with respect to other vDUs CPU set configuration.

According to embodiments of the invention, it may be provided that the PRBs and CPU set configuration of the different vDUs 720 are computed from previous radio controller output values. First, the PRBs weight may be used to distribute the total PRBs of the shared RU unit 730 across all the vDUs 720. For example, if three vDUs 720 with weights [0.12, 0.08, 0.8] are implemented and a total of 50 PRBs is available, the PRBs may be distributed according to the weights of each of the vDUs 720; thus, the PRB assignment would be [6, 4, 40].

According to embodiments of the invention, it may be provided that the CPU set configuration is computed from both the number of CPUs and the isolation level, taking into account the CPU topology. As pointed out previously, the different CPUs of the system share different cache levels, which directly influence the CPU overhead due to the noisy neighbors' problem. The CPU structure can be pictured as a graph. Fig. 8 shows such a CPU graph 800 exemplarily for the case of the intel i7 processor illustrated in Fig. 3. The CPU graph 800 is composed of the individual CPUs 810 (CPU0, ..., CPU7), the cores 820 (core0, ..., core3), with each core 820 comprising a pair of CPUs 810, and the CPU socket 830.

As can be obtained from Fig. 8, the closer the CPUs 810 are, the more cache levels they share and the less isolated they are. According to embodiments of the invention, the isolation level may be defined as the mean graph distance between two CPU set configurations using the CPU graph 800. For example,

$$isolation_{level}(\{1\}, \{1,5\}) = \frac{0+2}{2} = 1$$ or $isolation_{level}(\{1\}, \{2\}) = 4$. Based thereupon, the best CPU sets for each vDU 720 may be computed according to the cores 820 and the mean isolation level. In this way, there is a sense of "how isolated a vDU 720 is from other vDUs 720". Once the configurations per vDU 720 are computed, the computing platform interfaces may be used to change each vDU's configuration 720 accordingly. After that, the radio controller algorithm may wait until the time interval finishes.

According to embodiments of the present invention, the learning agent 740 may be trained in a separated and controlled environment where a loss value is computed for each pair of input context and output actions. The loss value indicates how good the actions the learning agent 740 took for that particular context were. In an embodiment it may be provided to compute the uplink and downlink packet losses using the bitrate measurement, the buffer status report, and the running MCS to compute the loss value. Then, the 3-tuple by the context, action, and loss value may be registered into the learning agent 740 so that the model of the computing platform 710 is further learned.

To summarize, embodiments of the present invention relate to some of the following aspects and advantages:

- An AI-driven intelligent radio controller configured to decide the join radio and computing resource allocation for the vDUs, which are deployed using hypervisors or containers in a virtualized environment where multiple vDUs sharing the same physical radio and computing resources that cause the noisy neighbors problem among them and lead to the increasing computing overhead.

- The controller jointly optimizes the largest amount of physical resource blocks (PRBs) allowed to each vDU and the CPU sets of each of the vDUs deployed in a shared computing platform to minimize the overall computing overhead.

- The controller uses jointly the information of the radio condition and traffic load of each vDU (of both uplink and downlink) in combination with the CPU topology of a radio computing platform to minimize the computing overhead coming from the noisy neighbors.

**Claims**

1. A computer-implemented method of resource allocation for multiple virtual distributed units, vDUs (720), deployed in a shared radio computing platform (710), wherein the vDUs (720) share the same Radio Unit, RU (730), having a fixed number of Physical Resource Blocks, PRBs, the method comprising:

 obtaining, by a radio controller, a set of metrics from the radio computing platform (710) for each of the vDUs (720) deployed;
 learning, by a learning agent (740) of the radio controller based on the obtained set of metrics, traffic patterns and a corresponding CPU consumption of the vDUs (720) deployed that is related to the respective traffic patterns; and
 computing, by the radio controller based on the learned traffic patterns and the CPU consumption of the vDUs (720), in a joint computation, a PRB assignment and CPU set configuration for each vDU (720), the CPU set configuration defining which CPUs or CPU cores the respective vDU is being assigned to.

2. The method according to claim 1, wherein the computing of the PRB assignment and CPU set configuration for each vDU (720) is performed by minimizing the overall computing overhead generated by noisy neighbors.

3. The method according to claim 1 or 2, wherein the set of metrics of each of the vDUs 720 includes at least one of CPU usage, uplink and downlink bitrate, buffer status report on uplink and downlink, uplink and downlink index Modulation Coding Scheme, MCS, uplink Signal-to-Noise Ratio, SNR, and downlink Channel Quality Indicator, CQI.

4. The method according to any of claims 1 to 3, further comprising:

limiting a maximum CPU usage and overhead of the vDUs (720) deployed by setting a limit to the number of PRBs that can be allocated to individual ones of the vDUs (720).

5. The method according to any of claims 1 to 4, wherein learning the traffic patterns and the CPU consumption of the vDUs (720) deployed is performed by the learning agent (740) based on reinforcement learning techniques.

6. The method according to any of claims 1 to 5, wherein the learning agent (740) uses a learning algorithm that operates on an input context vector including, per deployed vDU (720), a predicted SNR value, a predicated traffic in downlink value and a predicted traffic in uplink value.

7. The method according to claim 6, wherein the learning agent (740) uses a learning algorithm that produces an output action vector including, per deployed vDU (720), a PRBs weight, a number of CPUs and a CPU set isolation level.

8. The method according to claim 7, wherein the learning agent (740) computes a loss value for each pair of input context and output actions, wherein the loss value is calculated by computing uplink and downlink packet losses using bitrate measurement, buffer status reports, and a running MCS.

9. A radio controller for resource allocation for multiple virtual distributed units, vDUs (720), deployed in a shared radio computing platform (710), wherein the vDUs (720) share the same Radio Unit, RU (730), having a fixed number of Physical Resource Blocks, PRBs, the radio controller comprising one or more processors that, alone or in combination, are configured to provide for the execution of the following steps:

 obtaining a set of metrics from the radio computing platform (710) for each of the vDUs (720) deployed;
 learning, by a learning agent (740) based on the obtained set of metrics, traffic patterns and a corresponding CPU consumption of the vDUs (720) deployed that is related to the respective traffic patterns; and
 computing, based on the learned traffic patterns and the CPU consumption of the vDUs (720), in a joint computation, a PRB assignment and CPU set configuration for each vDU (720), the CPU set configuration defining which CPUs or CPU cores the respective vDU is being assigned to.

10. The controller according to claim 9, wherein the learning agent (740) is configured to learn the traffic patterns and the CPU consumption of the vDUs (720) deployed based on reinforcement learning techniques.

**11.** The controller according to claim 9 or 10, wherein the radio computing platform (710) includes an agent that is configured to obtain the set of metrics by performing respective measurements and to store the measurement results for the set of metrics in a metrics database (750), and

wherein the learning agent (740) is configured to fetch the set of metrics from the metrics database (750).

**12.** The controller according to any of claims 9 to 11, wherein the learning agent (740) is configured to communicate the computed PRB assignment and CPU set configuration for each vDU (720) via the radio computing platform's (710) Application Programming Interfaces, APIs.

**13.** The controller according to any of claims 9 to 12, wherein the learning agent (740) runs in discrete time intervals, and/or

wherein the learning agent (740) runs in a different location than the radio computing platform (710) in a controlled environment.

**14.** The controller according to any of claims 9 to 13, wherein the vDUs (720) are deployed in the radio computing platform (710) in containers or by using hypervisors.

**15.** A tangible, non-transitory computer-readable medium having instructions thereon which, upon being executed by one or more processors, alone or in combination, provide for execution of a method of resource allocation for multiple virtual distributed units, vDUs (720), deployed in a shared radio computing platform (710), wherein the vDUs (720) share the same Radio Unit, RU (730), having a fixed number of Physical Resource Blocks, PRBs, the method comprising:

obtaining, by a radio controller, a set of metrics from the radio computing platform (710) for each of the vDUs (720) deployed;
learning, by a learning agent (740) of the radio controller based on the obtained set of metrics, traffic patterns and a corresponding CPU consumption of the vDUs (720) deployed that is related to the respective traffic patterns; and
computing, by the radio controller based on the learned traffic patterns and the CPU consumption of the vDUs (720), in a joint computation, a PRB assignment and CPU set configuration for each vDU (720), the CPU set configuration defining which CPUs or CPU cores the respective vDU is being assigned to.

## Patentansprüche

**1.** Computerimplementiertes Verfahren zur Ressourcenzuweisung für mehrere virtuelle verteilte Einheiten, vDUs (720), die auf einer gemeinsam genutzten Funkrechenplattform (710) bereitgestellt sind, wobei die vDUs (720) dieselbe Funkeinheit, RU (730), mit einer festen Anzahl von physikalischen Ressourcenblöcken, PRBs, gemeinsam nutzen, wobei das Verfahren umfasst:

Erhalten eines Satzes von Metriken von der Funkrechenplattform (710) für jede der eingesetzten vDUs (720) durch einen Funkcontroller;
Lernen von Verkehrsmustern und eines entsprechenden, mit den jeweiligen Verkehrsmustern zusammenhängenden CPU-Verbrauchs der eingesetzten vDUs (720) durch einen Lernagenten (740) des Funkcontrollers auf der Grundlage des erhaltenen Satzes von Metriken; und
Berechnen einer PRB-Zuweisung und einer CPU-Set-Konfiguration für jede vDU (720) durch den Funkcontroller auf der Grundlage der erlernten Verkehrsmuster und des CPU-Verbrauchs der vDUs (720) in einer gemeinsamen Berechnung, wobei die CPU-Set-Konfiguration definiert, welchen CPUs oder CPU-Kernen die jeweilige vDU zugewiesen wird.

**2.** Verfahren nach Anspruch 1, wobei die Berechnung der PRB-Zuweisung und der CPU-Set-Konfiguration für jede vDU (720) durch Minimierung des durch "Noisy Neighbors" erzeugten gesamten Rechen-Overheads durchgeführt wird.

**3.** Verfahren nach Anspruch 1 oder 2, wobei der Satz von Metriken jeder der vDUs (720) mindestens eine der folgenden Metriken umfasst: CPU-Auslastung, Uplink- und Downlink-Bitrate, Buffer-Statusbericht zu Uplink und Downlink, Uplink- und Downlink-Index Modulations- und Codierungsschemas, MCS, Uplink-Signal-Rausch-Verhältnis, SNR, und Downlink-Kanalqualitätsindikator, CQI.

**4.** Verfahren nach einem der Ansprüche 1 bis 3, ferner umfassend:
Begrenzen einer maximalen CPU-Auslastung und eines maximalen Overheads der eingesetzten vDUs (720) durch Festlegen einer Grenze für die Anzahl von PRBs, die einzelnen vDUs (720) zugewiesen werden können.

**5.** Verfahren nach einem der Ansprüche 1 bis 4, wobei das Erlernen der Verkehrsmuster und des CPU-Verbrauchs der eingesetzten vDUs (720) durch den Lernagenten (740) unter Verwendung von Reinforcement-Learning-Techniken durchgeführt wird.

6. Verfahren nach einem der Ansprüche 1 bis 5, wobei der Lernagent (740) einen Lernalgorithmus verwendet, der auf einem Eingabekontextvektor arbeitet, der pro eingesetzter vDU (720) einen vorhergesagten SNR-Wert, einen vorhergesagten Downlink-Verkehrswert und einen vorhergesagten Uplink-Verkehrswert enthält.

7. Verfahren nach Anspruch 6, wobei der Lernagent (740) einen Lernalgorithmus verwendet, der einen Ausgabeaktionsvektor erzeugt, der pro eingesetzter vDU (720) eine PRBs-Gewichtung, eine Anzahl von CPUs und einen CPU-Set-Isolationsgrad enthält.

8. Verfahren nach Anspruch 7, wobei der Lernagent (740) für jedes Paar aus Eingabekontext und Ausgabeaktionen einen Verlustwert berechnet, wobei der Verlustwert durch Berechnung von Uplink- und Downlink-Paketverlusten unter Verwendung von Bitratenmessungen, Buffer-Statusberichten und einem aktuellen MCS berechnet wird.

9. Funkcontroller zur Ressourcenzuweisung für mehrere virtuelle verteilte Einheiten, vDUs (720), die auf einer gemeinsam genutzten Funkrechenplattform (710) bereitgestellt sind, wobei die vDUs (720) dieselbe Funkeinheit, RU (730) mit einer festen Anzahl von physikalischen Ressourcenblöcken, PRBs, gemeinsam nutzen, wobei der Funkcontroller einen oder mehrere Prozessoren umfasst, die allein oder in Kombination dazu eingerichtet sind, die folgenden Schritte auszuführen:

Erhalten eines Satzes von Metriken von der Funkrechenplattform (710) für jede der eingesetzten vDUs (720);
Erlernen von Verkehrsmustern und eines entsprechenden, mit den jeweiligen Verkehrsmustern zusammenhängenden CPU-Verbrauchs der eingesetzten vDUs (720) durch einen Lernagenten (740) auf der Grundlage des erhaltenen Satzes von Metriken; und
Berechnen einer PRB-Zuweisung und einer CPU-Set-Konfiguration für jede vDU (720) in einer gemeinsamen Berechnung auf der Grundlage der erlernten Verkehrsmuster und des CPU-Verbrauchs der vDUs (720), wobei die CPU-Set-Konfiguration definiert, welchen CPUs oder CPU-Kernen die jeweilige vDU zugewiesen wird.

10. Controller nach Anspruch 9, wobei der Lernagent (740) dazu eingerichtet ist, die Verkehrsmuster und den CPU-Verbrauch der eingesetzten vDUs (720) unter Verwendung von Reinforcement-Learning-Techniken zu lernen.

11. Controller nach Anspruch 9 oder 10, wobei die Funkrechenplattform (710) einen Agenten umfasst, der dazu eingerichtet ist, den Satz von Metriken durch Durchführung entsprechender Messungen zu erhalten und die Messergebnisse für den Satz von Metriken in einer Metrik-Datenbank (750) zu speichern, und
wobei der Lernagent (740) dazu eingerichtet ist, den Satz von Metriken aus der Metrik-Datenbank (750) abzurufen.

12. Controller nach einem der Ansprüche 9 bis 11, wobei der Lernagent (740) dazu eingerichtet ist, die berechnete PRB-Zuweisung und CPU-Set-Konfiguration für jede vDU (720) über Anwendungsprogrammierschnittstellen, APIs, der Funkrechenplattform (710) zu kommunizieren.

13. Controller nach einem der Ansprüche 9 bis 12, wobei der Lernagent (740) in diskreten Zeitintervallen läuft, und/oder
wobei der Lernagent (740) an einem anderen Ort als die Funkrechenplattform (710) in einer kontrollierten Umgebung läuft.

14. Controller nach einem der Ansprüche 9 bis 13, wobei die vDUs (720) auf der Funkrechenplattform (710) in Containern oder unter Verwendung von Hypervisoren bereitgestellt sind.

15. Nichtflüchtiges, computerlesbares Speichermedium mit Anweisungen, die, wenn sie von einem oder mehreren Prozessoren allein oder in Kombination ausgeführt werden, die Ausführung eines Verfahrens zur Ressourcenzuweisung für mehrere virtuelle verteilte Einheiten, vDUs (720), bewirken, die auf einer gemeinsam genutzten Funkrechenplattform (710) bereitgestellt sind, wobei die vDUs (720) dieselbe Funkeinheit, RU (730), mit einer festen Anzahl von physikalischen Ressourcenblöcken, PRBs, gemeinsam nutzen, wobei das Verfahren umfasst:

Erhalten eines Satzes von Metriken von der Funkrechenplattform (710) für jede der eingesetzten vDUs (720) durch einen Funkcontroller;
Erlernen von Verkehrsmustern und eines entsprechenden, mit den jeweiligen Verkehrsmustern zusammenhängenden CPU-Verbrauchs der eingesetzten vDUs (720) durch einen Lernagenten (740) des Funkcontrollers auf der Grundlage des erhaltenen Satzes von Metriken; und
Berechnen einer PRB-Zuweisung und einer CPU-Set-Konfiguration für jede vDU (720) durch den Funkcontroller auf der Grundlage der erlernten Verkehrsmuster und des CPU-Verbrauchs der vDUs (720) in einer gemeinsamen Berechnung, wobei die CPU-Set-Konfiguration definiert, welchen CPUs oder CPU-Kernen die jeweilige vDU zugewiesen wird.

## Revendications

1. Procédé d'allocation de ressources mis en œuvre par ordinateur pour plusieurs unités distribuées virtuelles, vDU (720), déployées dans une plateforme de calcul radio (710) partagée, dans lequel les vDU (720) partagent la même unité radio, RU (730), comprenant un nombre fixe de blocs de ressources physiques, PRB, le procédé comportant :

   l'obtention, par un contrôleur radio, d'un ensemble de métriques à partir de la plateforme de calcul radio (710) pour chacune des vDU (720) déployées ;
   l'apprentissage, par un agent d'apprentissage (740) du contrôleur radio sur la base de l'ensemble de métriques obtenu, de motifs de trafic et d'une consommation de CPU correspondante des vDU (720) déployées qui est liée aux motifs de trafic respectifs ; et
   le calcul, par le contrôleur radio sur la base des motifs de trafic appris et de la consommation de CPU des vDU (720), dans un calcul conjoint, d'une affectation de PRB et d'une configuration d'ensemble CPU pour chaque vDU (720), la configuration d'ensemble CPU définissant les CPU ou cœurs de CPU auxquels la vDU respective est affectée.

2. Procédé selon la revendication 1, dans lequel le calcul de l'affectation de PRB et de la configuration d'ensemble CPU pour chaque vDU (720) est réalisé en minimisant le surdébit de calcul général généré par des voisins bruyants.

3. Procédé selon la revendication 1 ou 2, dans lequel l'ensemble de métriques de chacune des vDU (720) inclut au moins l'un parmi une utilisation de CPU, un débit binaire de liaison montante et de liaison descendante, un rapport d'état de tampon de liaison montante et de liaison descendante, un schéma de codage de modulation, MCS, d'indice de liaison montante et de liaison descendante, un rapport signal/bruit, SNR, de liaison montante, et un indicateur de qualité du canal, CQI de liaison descendante.

4. Procédé selon l'une quelconque des revendications 1 à 3, comportant en outre :
   la limitation d'une utilisation de CPU maximale et d'un surdébit des vDU (720) déployées en fixant une limite au nombre de PRB qui peuvent être attribués à des vDU individuelles parmi les vDU (720).

5. Procédé selon l'une quelconque des revendications 1 à 4, dans lequel l'apprentissage des motifs de trafic et de consommation de CPU des vDU (720) déployées est réalisé par l'agent d'apprentissage (740) sur la base de techniques d'apprentissage de renforcement.

6. Procédé selon l'une quelconque des revendications 1 à 5, dans lequel l'agent d'apprentissage (740) utilise un algorithme d'apprentissage qui fonctionne sur un vecteur de contexte d'entrée incluant, par vDU (720) déployée, une valeur de SNR prédite, un trafic prédit en valeur de liaison descendante et un trafic prédit en valeur de liaison montante.

7. Procédé selon la revendication 6, dans lequel l'agent d'apprentissage (740) utilise un algorithme d'apprentissage qui produit un vecteur d'action de sortie incluant, par vDU (720) déployée, un poids de PRB, un nombre de CPU et un niveau d'isolation d'ensemble de CPU.

8. Procédé selon la revendication 7, dans lequel l'agent d'apprentissage (740) calcule une valeur de perte pour chaque paire de contexte d'entrée et d'actions de sortie, dans lequel la valeur de perte est calculée en calculant les pertes de paquets de liaison montante et de liaison descendante à l'aide d'une mesure de débit binaire, de rapports d'état de tampon et d'un MCS en cours d'exécution.

9. Contrôleur radio pour l'allocation de ressources pour plusieurs unités distribuées virtuelles, vDU (720), déployées dans une plateforme de calcul radio (710) partagée, dans lequel les vDU (720) partagent la même unité radio, RU (730), comprenant un nombre fixe de blocs de ressources physiques, PRB, le contrôleur radio comportant un ou plusieurs processeurs qui, seuls ou en combinaison, sont configurés pour permettre l'exécution des étapes suivantes :

   l'obtention d'un ensemble de métriques à partir de la plateforme de calcul radio (710) pour chacune des vDU (720) déployées ;
   l'apprentissage, par un agent d'apprentissage (740) sur la base de l'ensemble de métriques obtenu, de motifs de trafic et d'une consommation de CPU correspondante des vDU (720) déployées qui est liée aux motifs de trafic respectifs° ; et
   le calcul, sur la base des motifs de trafic appris et de la consommation de CPU des vDU (720), dans un calcul conjoint, d'une affectation de PRB et d'une configuration d'ensemble CPU pour chaque vDU (720), la configuration d'ensemble CPU définissant les CPU ou cœurs de CPU auxquels la vDU respective est affectée.

10. Contrôleur selon la revendication 9, dans lequel l'agent d'apprentissage (740) est configuré pour apprendre les motifs de trafic et la consommation de CPU des vDU (720) déployées sur la base de techniques d'apprentissage de renforcement.

11. Contrôleur selon la revendication 9 ou 10, dans lequel la plateforme de calcul radio (710) comporte un agent qui est configuré pour obtenir l'ensemble de métriques en réalisant des mesures respectives et pour stocker les résultats de mesure pour l'ensemble de métriques dans une base de données de métriques (750), et
dans lequel l'agent d'apprentissage (740) est configuré pour récupérer l'ensemble de métriques à partir de la base de données de métriques (750).

12. Contrôleur selon l'une quelconque des revendications 9 à 11, dans lequel l'agent d'apprentissage (740) est configuré pour communiquer l'affectation de PRB calculée et la configuration d'ensemble CPU pour chaque vDU (720) par le biais des interfaces de programmation d'application, API, de la plateforme de calcul radio (710).

13. Contrôleur selon l'une quelconque des revendications 9 à 12, dans lequel l'agent d'apprentissage (740) fonctionne à des intervalles de temps discrets, et/ou
dans lequel l'agent d'apprentissage (740) fonctionne dans un emplacement différent de la plateforme de calcul radio (710) dans un environnement contrôlé.

14. Contrôleur selon l'une quelconque des revendications 9 à 13, dans lequel les vDU (720) sont déployées dans la plateforme de calcul radio (710) dans des conteneurs ou en utilisant des hyperviseurs.

15. Support tangible, non transitoire, lisible par ordinateur, comportant des instructions qui, lorsqu'elles sont exécutées par un ou plusieurs processeurs, seuls ou en combinaison, permettent l'exécution d'un procédé d'allocation de ressources pour plusieurs unités virtuelles distribuées, vDU (720), déployées dans une plateforme de calcul radio (710) partagée, dans lequel les vDU (720) partagent la même unité radio, RU (730), comprenant un nombre fixe de blocs de ressources physiques, PRB, le procédé comportant :

l'obtention, par un contrôleur radio, d'un ensemble de métriques à partir de la plateforme de calcul radio (710) pour chacune des vDU (720) déployées ;
l'apprentissage, par un agent d'apprentissage (740) du contrôleur radio sur la base de l'ensemble de métriques obtenu, de motifs de trafic et d'une consommation de CPU correspondante des vDU (720) déployées qui est liée aux motifs de trafic respectifs ; et
le calcul, par le contrôleur radio sur la base des motifs de trafic appris et de la consommation de CPU des vDU (720), dans un calcul conjoint, d'une affectation de PRB et d'une configuration d'ensemble CPU pour chaque vDU (720), la configuration d'ensemble CPU définissant les CPU ou cœurs de CPU auxquels la vDU respective est affectée.

Fig. 1

Fig. 2

Fig. 3

Fig. 4

Fig. 5

Fig. 6

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018285166 A

**Non-patent literature cited in the description**

- **AYALA-ROMERO ; JOSE A. et al.** vrAln: A deep learning approach tailoring computing and radio resources in virtualized RANs. *The 25th Annual International Conference on Mobile Computing and Networking*, 2019